# EUROPEAN PATENT APPLICATION

(11) **EP 1 348 982 A2**
(43) Date of publication of application: **01.10.2003**
(21) Application number: 03006232.7
(22) Date of filing: 20.03.2003
(51) Int. Cl.: G01T 1/20

(54) **Radiation detector for use in computer tomography and manufacturing method therefor**

(30) Priority: 25.03.2002 JP 2002083160
(71) Applicant: HITACHI METALS, LTD., Minato.ku, Tokyo 105-8614 (JP)
(72) Inventor: Tsunota, Kenichi, Mohka, 321-4364 (JP); Matsui, Susumu, Mohka, 321-4331 (JP)
(74) Representative: Beetz & Partner Patentanwälte

(57) **Abstract**

Resins used in radiation detectors (100) undergo quality change owing to the irradiation. The quality change includes the degradation in the light reflectivity and light transmittance of the resins. The quality change of the resin is one of the causes for the output current reduction of the detectors and affects operating life of the detector. A radiation detector (100) and a CT device are provided which are small in the output current degradation of the radiation detector and long in working life even with a large irradiation. A cured mixture of a rutile type titanium oxide powder and a polyester resin is used for the light reflecting material covering (140) the scintillators (130). Additionally, a polyester resin is used for bonding the scintillators (130) and semiconductor photodetecting elements (120) together.

## Description

### BACKGROUND OF THE INVENTION

### 1. Field of the Invention

The present invention relates to a radiation detector, in particular, a radiation detector for use in a computed tomography (CT) device which uses radiation such as X-ray, γ-ray, and the like.

### 2. Description of the Related Art

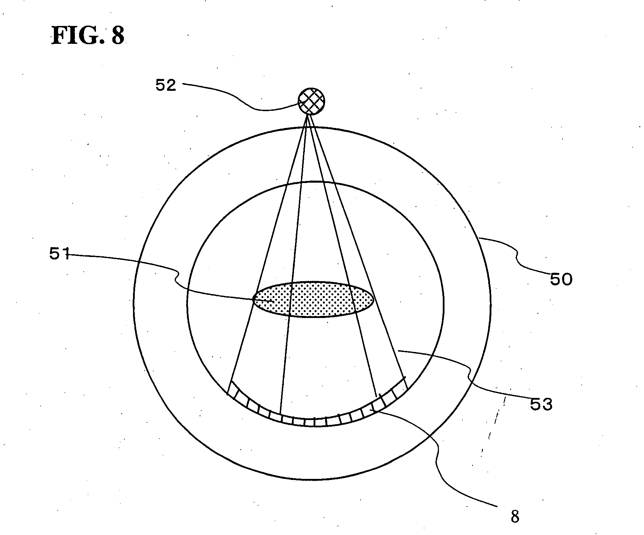

FIG. 8 shows a schematic diagram of a radiation CT device which uses radiation detectors. A subject 51 is arranged in the center of the CT device. A radiation source 52 (for example, an X-ray tube) is placed at a position on the outer circumferential side of a gantry 50 that rotates around the subject 51, and a plurality of radiation detectors 8 are arranged at the positions opposing to the radiation source 52 with the subject 51 therebetween. The radiation 53 emitted in a fan-like pattern from the radiation source 52 penetrates the subject 51 while being absorbed by the individual parts of the subject 51, and reaches the radiation detectors 8. The absorptions of the radiation 53 for the individual parts of the subject 51 are different from each other, and hence the intensity of the radiation 53 reaching the radiation detectors 8 becomes nonuniform depending on the individual parts of the subject 51. The nonuniform intensity is detected by the radiation detectors 8, and taken out as the outputs of the radiation detectors 8, and accordingly a light and shade image of the subject 51 can be obtained. The radiation source 52 and the radiation detectors 8 perform the measurements similar to that just described above while rotating around the subject 51. The measurement values thus obtained are synthesized and reconstructed, and accordingly it is possible to yield a CT image that is a sectional view of the subject 51.

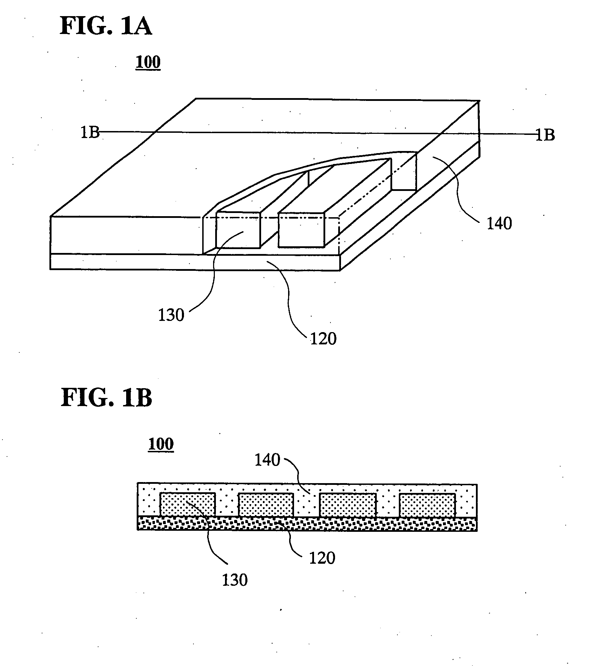

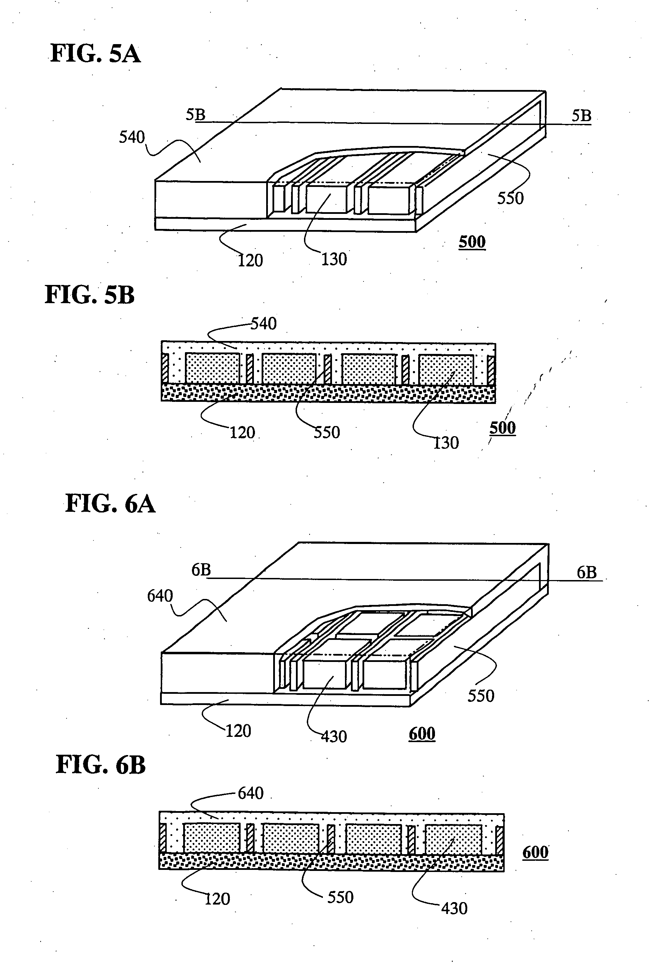

FIG. 1 and FIG. 6 each illustrates the structure of a radiation detector. FIG. 1A and FIG. 6A each shows a perspective view of a radiation detector with a part of the light reflecting material cut out for illustration. FIG. 1B and FIG. 6B respectively show the sectional views along the 1B-1B line in FIG. 1A and the 6B-6B line in FIG. 6A. A radiation detector 100 in FIG. 1 is generally referred to as a single array, wherein on a semiconductor photodetecting element array 120, which converts light to electricity, scintillators 130 are arranged which convert the radiation to light, and the faces of the scintillators other than the faces thereof in contact with the semiconductor photodetecting elements are covered with a light reflecting material 140. The radiation detector 600 illustrated in FIG. 6 is generally referred to as a multi-array, in which scintillators 430 are arranged in a grid pattern, and which structure is such that there are radiation shielding plates 550 within the portions, interposed between the scintillators 430, of a light reflecting material 640. FIG. 6 illustrates a structure in which radiation shielding plates 550 are arranged only in one direction, that is, either in rows or in columns, but it is possible to make a structure in which radiation shielding plates are arranged in two directions, that is, both in rows and in columns. Additionally, there is a single array type radiation detector which either contains or does not contain radiation shielding plates, and this is also the case for a multi-array type radiation detector. Incidentally, in FIGS. 1 and 6, and in the other figures, the same members are denoted by the same reference numerals.

The scintillators 130, 430 which convert radiation to light are composed of CdWO₄, Bi₄Ge₃O₁₂, Gd₂O₂S:Pr(Ce, F), and the like; these substances emit visible light on the incidence of radiation. The visible light thus emitted is received by the semiconductor photodetecting element fixed to the one side face of the scintillator and is converted to an electric signal. In FIGS. 1 and 6, and in the other figures, the semiconductor photodetecting element array 120 is depicted as a sheet of plate; the interior of the one sheet of plate constituting the semiconductor photodetecting element array is composed of a plurality of photodetecting elements facing respectively a plurality of scintillators bonded thereto. The resolution is degraded if the radiation incident on a scintillator passes through the scintillator and is again made to be incident on the neighboring scintillators. In this connection, as FIG. 6 shows, the radiation shielding plates 550, made of heavy metals such as Mo, W, Pb, and the like, can be provided between the scintillators to prevent the passage of the radiation between the scintillators.

Additionally, the visible light generated by a scintillator 130 or 430 is emitted along all the directions within the whole solid angle, and hence it is necessary to efficiently guide the visible light into the semiconductor photodetecting element bonded to the scintillator. Accordingly, the circumferential faces of the scintillator 130 or 430, other than the faces facing the semiconductor photodetecting element array 120, are covered with the high-reflectivity light reflecting material 140 or 640, respectively. The circumferential faces of a scintillator can be coated with a white coating material as a light reflecting material, or the radiation shielding plates, made of Mo or the like and coated with a white coating material, can be interposed between the scintillators. As for the white coating material, there is often used a material prepared by mixing or kneading an epoxy resin with titanium oxide (TiO₂), zinc oxide (ZnO), lead white (PbO), zinc sulfide (ZnS), or the like.

When a CT image is taken, the irradiation to the radiation detectors 8, during one rotation of the radiation source 52 and radiation detectors 8 around the subject 51, amounts to about one roentgen. In addition, a CT image taken for a person as a subject 51 requires 40 rotations on average, and accordingly the irradiation to the radiation detectors 8 amounts to about 500,000 roentgens for 5 years, on the assumption that 10 persons are measured a day with 5 working days a week. Thus, the radiation detectors 8 are required not to be degraded in performance inclusive of output and the like, even if the radiation detectors 8 are exposed to a large amount of radiation.

However, the radiation detectors in current use gradually decrease the output current as they are irradiated, and the output current reduces by nearly 10%, compared to the initial output, for the accumulated irradiation of 500,000 roentgens. Because the output current reduction of 10% or more causes the resolution degradation of the radiation CT device and accordingly fine CT images cannot be obtained, the replacement of the radiation detectors come to be required, which generates a great deal of cost.

The factors contributing to the output degradation of the radiation detectors include the deterioration of the semiconductor photodetecting elements and the degradation of the luminescence intensity of the scintillators themselves; however, the most significant factor has been found to be the remarkable degradation of the light reflectivity, caused by irradiation, in the light reflecting material formed on the surfaces of the scintillators. A further detailed investigation has revealed that the most significant factor is constituted by the reflectivity degradation in the light reflecting material and the light transmittance degradation in the adhesive material bonding the scintillators and semiconductor photodetecting elements together. Epoxy resin is mainly used both in the adhesive material bonding the scintillators and semiconductor photodetecting elements together and in the light reflecting material, and there occurs the problem that epoxy resin is deteriorated owing to irradiation.

### SUMMARY OF THE INVENTION

The present invention takes as its object the provision of a radiation detector which is small in the output current degradation due to irradiation and long in operating life.

The present invention also takes as its object the provision of a radiation CT device equipped with the radiation detectors which are small in the output degradation due to irradiation and long in working life.

The radiation detector of the present invention has a structure in which a plurality of laminated scintillators and semiconductor photodetecting elements are arranged side by side, and a light reflecting material is provided around the scintillators except for the faces thereof facing the semiconductor photodetecting elements, the light reflecting material being made of a mixture consisting of a polyester resin and a rutile type titanium oxide powder.

Polyester resin is transparent to allow light to pass therethrough, and accordingly cannot act as a light reflecting material on its own. Thus, it is necessary to mix therewith a white rutile type titanium oxide powder. As the polyester resin, either a saturated polyester resin or an unsaturated polyester resin can be used. Polyester resin with nonvolatile content of 30 to 60 % in weight is suitable to the invention since the polyester resin has a viscosity less than 100 ps to facilitate the mixing with a rutile type titanium oxide powder, while a polyester resin with a larger nonvolatile content has a viscosity more than 100 ps, leading to nonuniform mixing with a rutile type titanium oxide. The polyester resin that is liquid at an ambient temperature is solidified by mixing with a solidifier (e.g., methylethylketone peroxide) and a solidification facilitator (e.g., octenic acid cobalt and naphthenic acid cobalt) and heating at about 80 °C. The nonvolatile content of polyester resin is measured as the weight ratio (%) of solidified polyester obtained at 80 °C for 9 hours to liquid polyester. It is preferable to use an easily defoaming polyester resin (for example, an easily defoaming unsaturated polyester resin, PolySet NR2172APT, manufactured by Hitachi Chemical Co. Ltd., and the like) which can easily release the air contained in the resin when heated and cured. Polyester resin is used because among polymers, polyester is low in deterioration due to irradiation.

It is preferable that the light reflecting material of the present invention contains 0.25 to 3 parts by weight of a rutile type titanium oxide powder and one part by weight of polyester resin.

The weight ratio between the polyester resin and the rutile type titanium oxide in the light reflecting material needs to be varied depending on the target reflectivity; the light reflectivity for the light in the light wavelength range from 420 to 700 nm can be made 93.5% or more by making the content of the rutile type titanium oxide powder of 0.25 parts or more in relation to one part of polyester resin. Additionally, even after irradiation of 500,000 roentgens, the variation of the light reflectivity of the light reflecting material can be made less than one point, and the reflectivity thereof can be made 93% or more. As the weight ratio of the light reflecting rutile type titanium oxide powder is increased, the light reflectivity of the light reflecting material can be increased; with the weight ratio exceeding 3, the light reflectivity is saturated, so that no improvement effect of the light reflectivity can be attained by making the weight ratio of the rutile type titanium oxide powder further larger. In addition, with the weight ratio of the rutile type titanium oxide powder of more than 4, the adhesive property of the polyester resin is degraded, and the light reflecting material is peeled off both from the scintillators and from the radiation shielding plates. Thus, it is preferable that the mixing ratio is made 3 or less. In the present specification, the term "points" refers to the difference between the numerical values given in percentages; for example, when the light reflectivity is degraded from 98.5% to 96.0% by irradiation, the degradation is referred to as be "reduction by 2.5 points".

As for the rutile type titanium oxide powder used in the light reflecting material of the present invention, it is preferable that the average grain size thereof ranges from 0.15 µm to 1 µm.

It is preferable that the average grain size of rutile type titanium oxide ranges from 0.15 µm to 1 µm. The average grain size smaller than 0.15 µm is not appropriate, because with this average grain size the light reflectivity of the light reflecting material is degraded to be as low as 92%. On the contrary, it has been confirmed that with the average grain size larger than 1 µm, the light reflectivity of the light reflecting material is degraded to be as low as 92%. When rutile type titanium oxide with the average grain size ranging from 0.15 µm to 1 µm is used, it is possible to attain a light reflectivity of 93.5% or more. The light reflectivity difference before and after irradiation of 500,000 roentgens is of the order of 0.5 points, and a light reflectivity of more than 93% can be ensured even after irradiation of 500,000 roentgens.

As for the rutile type titanium oxide powder used for the light reflecting material of the present invention, the surface of the rutile type titanium oxide powder is coated with at least one of Al₂O₃ and SiO₂; it is preferable that the. light reflecting material contains Al₂O₃ and SiO₂ in the sum content of 1 to 15 wt% in relation to the total amount of titanium oxide, Al₂O₃, and SiO₂, and contains titanium oxide in the content ranging from 99 to 85 wt%.

With a composition outside the above described composition range, the light reflecting material exhibits a light reflectivity less than 90%. Within the above described composition, the light reflectivity degradation of the light reflecting material before and after irradiation of 500,000 roentgens can be suppressed to a point less than one, and accordingly the light reflectivity can attain a value of 93% or more even after irradiation.

Polyester resin includes various types in which the molecular weights are different from each other, and some are saturated and some others are unsaturated. In addition to a high initial light transmittance, the light transmittance is required to remain high even after irradiation of 500,000 roentgens. It is preferable to select a polyester resin which is high in the initial light transmittance for the light in the wavelength region from 420 to 700 nm, and for which the light transmittance degradation for the light in the wavelength region from 420 to 700 nm is less than one point before and after irradiation of at least 500,000 roentgens.

A polyester resin is used as resin, and the average grain size, mixing weight ratio, and surface treatment of the rutile type titanium oxide to be mixed with the polyester resin are appropriately selected; thus, the difference of the radiation detector output can be suppressed to be less than 10% before and after irradiation of 500,000 roentgens, and hence the working life of the radiation detectors can be elongated; accordingly, the replacement frequency of the radiation detectors can be reduced, and additionally the maintenance cost reduction can be intended.

It is preferable that in the radiation detector of the present invention, at least the scintillators and semiconductor photodetecting elements are bonded to each other with a polyester resin. Both for the bonding portions between the scintillators and the light reflecting material and for the bonding portions between the radiation shielding plates and the semiconductor photodetecting elements, it is not necessary to use a polyester resin, because even if the bonding resin undergoes change in quality in these portions, the change does not significantly affect the outputs of the semiconductor photodetecting elements; however, for the purpose of assembling the radiation detector, it is convenient to use a polyester resin also for these bonding portions.

The radiation detector of the present invention is manufactured according to a method comprising the steps of:
providing a semiconductor photodetecting element array having a plurality of semiconductor photodetecting elements, and a scintillator block;
machining a plurality of parallel grooves on the scintillator block from the top face (one face) of the scintillator block toward the bottom face (an opposite face to the above mentioned one face) of the scintillator block, with a portion of the thickness of the scintillator block left unmachined on the bottom face side to form a plurality of scintillators which are segmented by the plurality of grooves but are connected to each other by the non-cut-off portion of the scintillator block having a portion of the scintillator block thickness;
coating the circumferential faces of the scintillator block (inclusive of the above mentioned top face) other than the bottom face with a liquid polyester resin kneaded with a rutile type titanium oxide powder to fill into the plurality of formed grooves with the liquid polyester resin kneaded with rutile type titanium oxide and curing the polyester resin to form a light reflecting material on the circumferential faces of the scintillators and between the scintillators;
grinding and/or polishing the scintillator block from the bottom face of the scintillator block to remove the above described non-cut-off portion of the scintillator block to form faces, on the face opposite to the above described top face, at the same level on the plurality of scintillators and the light reflecting material surrounding them; and
bonding the semiconductor photodetecting element array having the plurality of semiconductor photodetecting elements with a polyester resin onto the faces formed at the same level on the plurality of scintillators and the light reflecting material surrounding them so that each of the semiconductor photodetecting elements faces each of the polished end faces of the scintillators located in the faces fabricated at the same level.

In the present invention, when a radiation detector is manufactured which has the radiation shielding plates between the scintillators, the radiation shielding plates are inserted into the grooves after the step of machining a plurality of grooves in the scintillator block in the above described method.

When a polyester resin with a small nonvolatile content is used, sometimes the plurality of grooves formed in the scintillator block cannot be filled with the light reflecting material. In this connection, a film, which has been molded into a white sheet-like film from a polyester resin kneaded beforehand with a titanium oxide powder and the like, can be used together with a mixture of a polyester resin and a titanium oxide powder. For example, a biaxially stretched polyester film, that is commercially available from Toray Industrial, Inc., with the brand name of Lumirror, can be used. White polyester sheets are inserted into the grooves formed in the scintillator block, and then a light reflecting material made by mixing rutile type titanium oxide and a polyester resin is filled in between the scintillator and the white polyester sheet, and cured. The white polyester sheet is free from the volume reduction on heating, and permits a reliable charging of the light reflecting material.

The radiation detector of the present invention can also be manufactured by a method comprising the steps of:
providing a semiconductor photodetecting element array having a plurality of semiconductor photodetecting elements, and a plurality of scintillators each having nearly the same thickness as the width of each semiconductor photodetecting element in the semiconductor photodetecting element array are made ready;
coating one face, parallel with the direction of thickness, of each of the plurality of scintillators with a liquid polyester resin kneaded with a rutile type titanium oxide powder, laminating the plurality of scintillators, and curing the polyester resin;
machining one side face of the laminated scintillators so that the plurality of scintillators and the layer of the mixture interposed therebetween, composed of a polyester resin and a rutile type titanium oxide powder, have faces at the same level;
coating the circumferential faces of the laminated scintillators, other than the above described machined faces, with a liquid polyester resin kneaded with a rutile type titanium oxide powder, and curing the resin to form a light reflecting material; and
bonding the semiconductor photodetecting element array having the plurality of semiconductor photodetecting elements with a polyester resin onto the faces machined at the same level, so that each of the semiconductor photodetecting elements faces each of the machined end faces of the scintillators.

In the present invention, a radiation detector having radiation shielding plates between the scintillators can be manufactured by another manufacturing method comprising the steps of
providing a semiconductor photodetecting element array having a plurality of semiconductor photodetecting elements, a plurality of scintillators each having nearly the same thickness as the width of a semiconductor photodetecting element in the semiconductor photodetecting element array, and a plurality of radiation shielding plates;
coating both faces, along the direction of thickness, of each of the plurality of scintillators with a liquid polyester resin kneaded with a rutile type titanium oxide powder, alternately laminating the scintillators and radiation shielding plates, and curing the polyester resin;
machining one side face of the body of the laminated scintillators so that the plurality of scintillators, the radiation shielding plates interposed therebetween, and the layer of the mixture, composed of a polyester resin and a rutile type titanium oxide powder, have faces at the same level;
coating the circumferential faces of the laminated scintillators, other than the above described machined faces, with a liquid polyester resin kneaded with a rutile type titanium oxide powder, and curing the resin to form a light reflecting material; and
bonding the semiconductor photodetecting element array having the plurality of semiconductor photodetecting elements with a polyester resin onto the faces machined at the same level, so that each of the semiconductor photodetecting elements faces each of the machined end faces of the scintillators.

### BRIEF DESCRIPTION OF THE DRAWINGS

FIG. 1A is a perspective view of a radiation detector with a part of the light reflecting material having been cut out for illustration, and FIG. 1B is a sectional view of the radiation detector along the 1B-1B line in FIG. 1A;

FIGS. 2A through 2F are a diagram illustrating the manufacturing processes of the radiation detector shown in FIG. 1;

FIG. 3 shows a perspective view of a test specimen for use in the evaluation of the light reflectivity of the light reflecting material used in the radiation detector of the present invention;

FIG. 4A is a perspective view of the radiation detector of another example with a part of the light reflecting material having been cut out for illustration, and FIG. 4B is a sectional view of the radiation detector along the 4B-4B line in FIG. 4A;

FIG. 5A is a perspective view of the radiation detector of yet another example with a part of the light reflecting material having been cut out for illustration, and FIG. 5B is a sectional view of the radiation detector along the 5B-5B line in FIG. 5A;

FIG. 6A is a perspective view of the radiation detector of further yet another example with a part of the light reflecting material having been cut out for illustration, and FIG. 6B is a sectional view of the radiation detector along the 6B-6B line in FIG. 6A;

FIGS. 7A through 7H are a diagram illustrating the manufacturing processes of the radiation detector shown in FIG. 6; and

FIG. 8 is a view illustrating a radiation CT device.

### DETAILED DESCRIPTION OF THE PREFERRED EMBODIMENTS

FIG. 1A shows a perspective view of the radiation detector according to the present invention, with a part of the light reflecting material removed for illustration, and FIG. 1B shows the sectional view along the 1B-1B line in FIG. 1A. The chain double-dashed line portion of FIG. 1A is deprived of the light reflecting material for the purpose of revealing the internal structure. In the radiation detector 100, a plurality of rectangular planar scintillators 130 are arranged at regular intervals in a row on the semiconductor photodetecting element array 120 which converts light to electricity. In the figure, the semiconductor photodetecting element array 120 is depicted as a single body, but the interior thereof is actually constituted with a plurality of photodetecting elements respectively facing a plurality of scintillators. In FIG. 1, for convenience of explanation, the number of the scintillators is assumed to be 4, but actually 8 to 24 scintillators are arranged. Except for the faces of the scintillators 130 facing the semiconductor photodetecting elements, the circumferential faces of the scintillators 130 are covered with a light reflecting material 140 composed of a polyester resin containing rutile type titanium oxide.

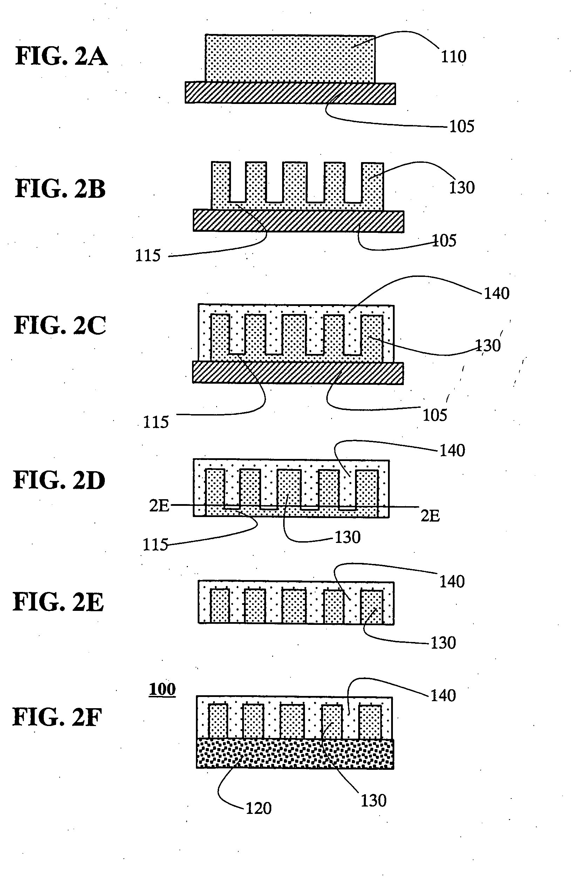

The manufacture of the radiation detector 100 of the present invention is described below with reference to FIG. 2. A scintillator wafer, that is, a scintillator block 110 was bonded to a machining jig 105 using an adhesive wax (unshown in the figure) (see FIG. 2A). Using a circumference slicer, a plurality of parallel grooves were cut in a comb-teeth pattern on the scintillator wafer from the top face (one face) of the scintillator wafer toward the bottom face (the other face opposite to the above mentioned one face), to form a plurality of scintillators 130 partitioned with the plurality of grooves (see FIG. 2B). The depth for the comb-teeth patterned grooves was made to be of the order of 90% of the scintillator wafer thickness, and a part 115 of the scintillator wafer having a thickness of the order of 10% served to connect the plurality of scintillators together; the scintillators might be cut off completely, but were left to be structurally connected with each other in the present embodiment. A liquid polyester resin kneaded with rutile type titanium oxide was applied to coat the circumferential faces of the scintillator wafer machined in a comb-teeth pattern except for the bottom face of the scintillator wafer (the face attached to the machining jig 105), and was filled into the plurality of grooves formed; then the scintillator wafer was heated in the air at 80°C for 3 hours to cure the resin and to form a light reflecting material 140 (see FIG. 2C). A fence was provided around the scintillator wafer 110 so that the liquid polyester resin kneaded with rutile type titanium oxide might not run out; the fence is not shown in the figure. The liquid polyester resin kneaded with rutile type titanium oxide was made to coat the circumferential faces of the comb-teeth patterned scintillator wafer and was filled into the grooves thereof. Then, for the purpose of curing the liquid polyester resin, the wafer was placed in a pot made of polyvinyl chloride and the pot was made to rotate around its axis at about 1,000 rpm and to revolve at about 2,000 rpm, while the interior of the pot was made to reach a vacuum of 3 x 10⁻³ MPa or less, thus defoaming the polyester resin. The integrated body of the scintillator wafer and the light reflecting material was detached from the machining jig 105 (see FIG. 2D). The connection portion 115 of the comb-teeth patterned scintillator wafer was ground and polished from the bottom face thereof up to the 2E-2E level to remove the non-disconnected portion 115 of the scintillator wafer and to separate the scintillators into the individual channels; then, the same level faces were machined both for the plurality of scintillators and for the light reflecting material 140 surrounding them (see FIG. 2E). A semiconductor photodetecting element array 120 was bonded with a polyester resin onto the same level faces formed both on the plurality of scintillators and on the light reflecting material 140 surrounding them, in such a way that in the above mentioned same level faces, the semiconductor photodetecting elements were made to face respectively the scintillators 130, thus manufacturing the radiation detector 100 (see FIG. 2F).

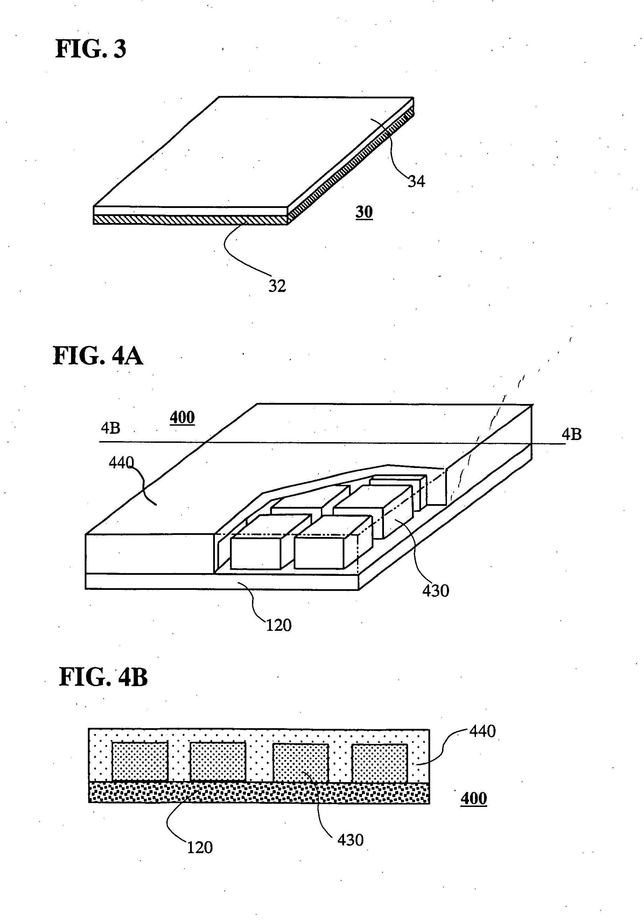

By using a test specimen 30 shown in FIG. 3, the light reflectivity of the light reflecting material used in the present invention was evaluated. The test specimen 30 of 0.05 mm in thickness was prepared by applying the light reflecting material 34 onto a molybdenum plate 32 of 20 mm × 30 mm × 1 mm (thickness) and by heating to cure in the air at 80°C for 3 hours. The light reflectivity was obtained from the ratio of the intensity of the light (wavelength: 512 nm) reflected from the light reflecting material 34 of the test specimen 30 to the intensity of the light incident to the light reflecting material 34. By varying the mixing ratio between the polyester resin and the rutile type titanium oxide powder in the light reflecting material, the average grain size of the used rutile type titanium oxide powder, and the amount of Al₂O₃ and SiO₂ added to the rutile type titanium oxide, the effects thereof on the light reflectivity and the light reflectivity difference before and after irradiation corresponding to 500,000 roentgens were measured on a spectrophotometer.

First of all, the mixing ratio between the polyester resin and the rutile type titanium oxide powder in the light reflecting material will be explained below. As for the light reflecting material 34 of the test specimen 30, a rutile type titanium oxide powder subjected to the treatment of applying the fine powders of Al₂O₃ and SiO₂ respectively in 1 wt% to the surfaces of the rutile type titanium oxide grains (average grain size: about 0.3 µm) and a polyester resin were mixed together, and the mixing weight ratio of the rutile type titanium oxide to the polyester resin was varied from 0 to 6.0. Table 1 shows the weight ratios of the rutile type titanium oxide mixed with the polyester resin taken to be unity in weight, the light reflectivities and the differences thereof before and after irradiation corresponding to 500,000 roentgens, and the adhesion between the molybdenum (Mo) plate 32 and the light reflecting material 34. As the weight ratio of rutile type titanium oxide to the polyester resin was increased, the light reflectivities before and after the irradiation were increased. When the weight ratio of rutile type titanium oxide was 0.25 or more, the light reflectivity was 93.5% or more even after irradiation corresponding to 500,000 roentgens, and additionally the light reflectivity difference before and after the irradiation was 0.6 points or less. However, when the weight ratio of the rutile type titanium oxide to the polyester resin exceeded 4.0, the adhesive property was degraded, and the light reflecting material peeled off from the molybdenum plate, hence the optimal weight ratio ranging from 0.25 to 3.

**Table 1**

| Sample | Resin used | Weight ratio of titanium oxide (to resin weight assumed as 1) | Light reflectivity (%) | | Light reflectivity difference | Peeling from Mo-plate |
|---|---|---|---|---|---|---|
| | | | Before irradiation | After irradiation | | |
| 1 | Polyester resin | 0 | 15.0 | 14.2 | 0.8 | No Peel off |
| 2 | Do. | 0.1 | 91.1 | 90.4 | 0.7 | Do. |
| 3 | Do. | 0.25 | 94.9 | 94.3 | 0.6 | Do. |
| 4 | Do. | 0.5 | 97.0 | 96.5 | 0.5 | Do. |
| 5 | Do. | 1.0 | 98.6 | 98.1 | 0.5 | Do. |
| 6 | Do. | 2.0 | 99.0 | 98.6 | 0.4 | Do. |
| 7 | Do. | 3.0 | 98.9 | 98.6 | 0.3 | Do. |
| 8 | Do. | 4.0 | 98.8 | 98.6 | 0.2 | Peel off observed |
| 9 | Do. | 5.0 | 99.1 | 98.9 | 0.2 | Do. |
| 10 | Do. | 6.0 | 99.0 | 98.9 | 0.1 | Do. |

Next, varying the average grain size of the rutile type titanium oxide powder used for the light reflecting material, light reflectivities and their differences were studied. The average grain size of the rutile type titanium oxide powder was varied from 0.1 µm to 2.0 µm, as shown in Table 2. The rutile type titanium oxide powder was subjected to surface coating treatment with the fine powders of Al₂O₃ and SiO₂ respectively in 1 wt%. The test specimens 30 shown in FIG. 3 were prepared with mixtures of the polyester resin and the rutile type titanium oxide powder, which mixtures have a fixed weight ratio being one. The light reflectivities (wavelength: 512 nm) of the light reflecting materials of the test specimens 30 before and after irradiation corresponding to 500,000 roentgens were measured on a spectrophotometer. Table 2 shows the average grain sizes of the rutile type titanium oxide, the light reflectivities, and the light reflectivity differences before and after irradiation corresponding to 500,000 roentgens. In all the samples (samples 11 through 19), the light reflectivity differences before and after irradiation were 0.5 points or less. Additionally, within the average grain size range from 0.15 µm to 1.0 µm of the rutile type titanium oxide, the light reflectivities were more than 93%, even after irradiation. From the facts, the optimal average grain size of the rutile type titanium oxide is found to fall within the range from 0.15 µm to 1 µm.

**Table 2**

| Sample | Average grain size of titanium oxide (micrometer) | Light reflectivity (%) | | Light reflectivity difference (points) |
|---|---|---|---|---|
| | | Before irradiation | After irradiation | |
| 11 | 0.1 | 90.4 | 89.9 | 0.5 |
| 12 | 0.15 | 94.2 | 93.8 | 0.4 |
| 13 | 0.2 | 94.5 | 94.2 | 0.3 |
| 14 | 0.25 | 96.3 | 95.8 | 0.5 |
| 15 | 0.35 | 96.6 | 96.4 | 0.2 |
| 16 | 0.5 | 95.5 | 95.0 | 0.5 |
| 17 | 1.0 | 93.6 | 93.3 | 0.3 |
| 18 | 1.5 | 89.5 | 89.0 | 0.5 |
| 19 | 2.0 | 87.3 | 86.9 | 0.4 |

Next, description is made below on the surface treatment of the rutile type titanium oxide powder. The rutile type titanium oxide powder subjected to surface coating treatment with Al₂O₃ and SiO₂ in the sum content of 0 to 20 wt% was kneaded with a polyester resin to prepare the test specimens 30 from samples 20 to 41 shown in Table 3. The mixing weight ratio of the rutile type titanium oxide powder to the polyester resin was fixed to be one. The light reflectivities (wavelength: 512 nm) of the light reflecting materials of the test specimens 30 before and after irradiation corresponding to 500,000 roentgens were measured on a spectrophotometer. For samples 21 through 35 shown in Table 3, the light reflectivities after irradiation were 93% or more, and the light reflectivity differences before and after irradiation were 0.5 points or less. However, in samples 36 through 41 containing Al₂O₃ and SiO₂ in the sum content of 16 wt% or more, the light reflectivities were 91% or less, while in samples 39 to 41 containing Al₂O₃ and SiO₂ in the sum content of 20 wt%, the light reflectivity differences before and after irradiation were rather large. As can be seen from these results, it is optimal that either Al₂O₃ or SiO₂ is contained in the content of 1 wt% or more, and Al₂O₃ and SiO₂ are contained in the sum content of 15 wt% or less.

**Table 3**

| Sample | Composition of light reflecting material (wt.%) | | | | Light reflectivity (%) | | Light reflectivity difference (points) |
|---|---|---|---|---|---|---|---|
| | Rutile titanium oxide | Al₂O₃ | SiO₂ | Al₂O₃+SiO₂ | Before irradiation | After irradiation | |
| 20 | 100 | 0 | 0 | 0 | 87.5 | 87.0 | 0.5 |
| 21 | 99 | 1 | 0 | 0 | 93.6 | 93.2 | 0.4 |
| 22 | 99 | 0 | 1 | 0 | 93.5 | 93.0 | 0.5 |
| 23 | 99 | - | - | 1 | 93.7 | 93.4 | 0.3 |
| 24 | 98 | 2 | 0 | 0 | 98.5 | 98.0 | 0.5 |
| 25 | 98 | 0 | 2 | 0 | 98.5 | 98.1 | 0.4 |
| 26 | 98 | - | - | 2 | 98.3 | 98.0 | 0.3 |
| 27 | 95 | 5 | 0 | 0 | 96.4 | 96.1 | 0.3 |
| 28 | 95 | 0 | 5 | 0 | 96.5 | 96.2 | 0.3 |
| 29 | 95 | - | - | 5 | 96.4 | 95.9 | 0.5 |
| 30 | 90 | 10 | 0 | 0 | 95.5 | 95.3 | 0.2 |
| 31 | 90 | 0 | 10 | 0 | 95.3 | 94.9 | 0.4 |
| 32 | 90 | - | - | 10 | 95.7 | 95.2 | 0.5 |
| 33 | 85 | 15 | 0 | 0 | 93.5 | 93.2 | 0.3 |
| 34 | 85 | 0 | 15 | 0 | 93.6 | 93.1 | 0.5 |
| 35 | 85 | - | - | 15 | 93.7 | 93.2 | 0.5 |
| 36 | 84 | 16 | 0 | 0 | 90.5 | 90.3 | 0.2 |
| 37 | 84 | 0 | 16 | 0 | 90.4 | 90.0 | 0.4 |
| 38 | 84 | - | - | 16 | 90.3 | 89.8 | 0.5 |
| 39 | 80 | 20 | 0 | 0 | 88.3 | 86.8 | 1.5 |
| 40 | 80 | 0 | 20 | 0 | 88.5 | 87.2 | 1.3 |
| 41 | 80 | - | - | 20 | 88.4 | 87.0 | 1.4 |
| Note: In Table 3, the nonvanishing values under the heading of Al₂O₃ + SiO₂ refer to the sum content of Al₂O₃ and SiO₂, and mean that the respective contents of Al₂O₃ and SiO₂ were not determined. | | | | | | | |

On the basis of the above described experimental results, the radiation detector of the present invention shown in FIG. 1 used a light reflecting material which was composed of 1 part by weight of a polyester resin and 0.25 to 3 parts by weight of a rutile type titanium oxide powder of 0.15 to 1 µm in average grain size, which titanium oxide powder was subjected to surface treatment with Al₂O₃ and/or SiO₂ in the sum content of from 1 wt% to 15 wt%. Even after irradiation corresponding to 500,000 roentgens, it is possible that the output difference of the radiation detector was made to be 10% or less, so that the elongation of the working life of a radiation detector was attained.

FIGS. 4 through 6 show the radiation detectors 400, 500, and 600 according to other embodiments of the present invention. As for the radiation detector 400 shown in FIG. 4, FIG. 4A is a perspective view with a part of the light reflecting material removed, and FIG. 4B is a sectional view of the radiation detector along the 4B-4B line in FIG. 4A. The chain double-dashed line portion of FIG. 4A is deprived of the light reflecting material for the purpose of revealing the internal structure. In the radiation detector 400 shown in FIG. 4, a plurality of nearly square-shaped (in plane) scintillators 430 are arranged, both longitudinally and transversely, on a semiconductor photodetecting element array 120, and the scintillators 430 are covered with a light reflecting material 440 composed of a polyester resin containing rutile type titanium oxide powder, except for the faces facing the semiconductor photodetecting element array 120. In the figure, the semiconductor photodetecting element array 120 is shown as a single body; however, the semiconductor photodetecting element array 120 is actually composed of a plurality of elements facing the respective scintillators. The description of the manufacturing processes of the radiation detector 400 is omitted here, since the manufacture of the radiation detector 400 seemingly can be seen from the manufacturing processes of the radiation detector 100 described above with reference to FIG. 2.

As for the radiation detector 500 shown in FIG. 5, FIG. 5A is a perspective view with a part of the light reflecting material removed, and FIG. 5B is a sectional view of the radiation detector along the 5B-5B line in FIG. 5A. The chain double-dashed line portion of FIG. 5A is deprived of the light reflecting material for the purpose of revealing the internal structure. In the radiation detector 500 shown in FIG. 5, a plurality of rectangular (in plane) scintillators 130 are arranged transversely in a row, on a semiconductor photodetecting element array 120, and the scintillators 130 are coated with a light reflecting material 540 composed of a polyester resin containing rutile type titanium oxide powder, except for the faces facing the semiconductor photodetecting element array 120. In the figure, the semiconductor photodetecting element array 120 is shown as a single body; however, the semiconductor photodetecting element array 120 is actually composed of a plurality of elements facing the respective scintillators. Radiation shielding plates 550 are provided between neighboring scintillators 130, and on the end sides of the scintillators 130 on both ends; a light reflecting material 540 is filled in between each radiation shielding plate 550 and its nearest neighbor scintillator 130. The description of the manufacturing processes of the radiation detector 500 is omitted here, since the manufacture of the radiation detector 500 seemingly can be seen from the manufacturing processes of the radiation detector 100 described above with reference to FIG. 2.

As for the radiation detector 600 shown in FIG. 6, FIG. 6A is a perspective view with a part of the light reflecting material removed, and FIG. 6B is a sectional view of the radiation detector along the 6B-6B line in FIG. 6A. The chain double-dashed line portion of FIG. 6A is deprived of the light reflecting material for the purpose of revealing the internal structure. In the radiation detector 600 shown in FIG. 6, a plurality of nearly square-shaped (in plane) scintillators 430 are arranged, both longitudinally and transversely, on a semiconductor photodetecting element array 120, and the scintillators 430 are coated with a light reflecting material 640 composed of a polyester resin containing rutile type titanium oxide powder, except for the faces facing the semiconductor photodetecting element array 120. In the figure, the semiconductor photodetecting element array 120 is shown as a single body; however, the semiconductor photodetecting element array 120 is actually composed of a plurality of elements facing the respective scintillators. Radiation shielding plates 550 are provided between the neighboring scintillators 430, and on the end sides of the scintillators 430 on both ends; a light reflecting material 640 is filled in between each radiation shielding plate 550 and its neighboring scintillator 430.

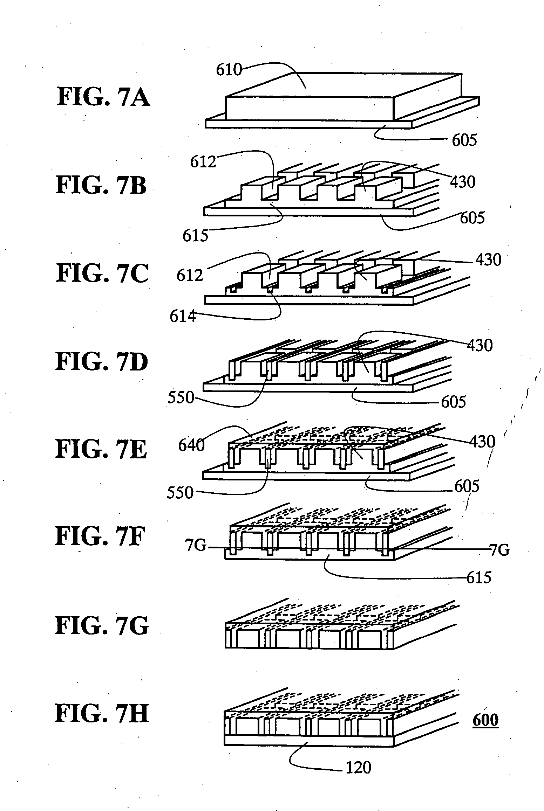

The manufacture of the multi-array type radiation detector 600 having the radiation shielding plates 550, shown in FIG. 6, is described below with reference to FIG. 7. A scintillator wafer, that is, a scintillator block 610 is bonded to a machining jig 605 using an adhesive wax (unshown in the figure) (see FIG. 7A). Using a circumference slicer, a plurality of parallel, primary grooves 612 are cut in a grid pattern on the scintillator wafer from the top face (one face) of the scintillator wafer toward the bottom face (the other face opposite to the above mentioned one face), to form a plurality of scintillators 430 partitioned both longitudinally and transversely with the plurality of grooves 612 arranged parallel to one another both longitudinally and transversely (see FIG. 7B). The depth for the grid patterned grooves 612 is made to be of the order of 90% of the scintillator wafer thickness, and a part 615 of the scintillator wafer having a thickness of the order of 10% serves to connect the plurality of scintillators 430, which may be cut off completely, but are left to be structurally connected with each other in the present embodiment. The end portions of the scintillator wafer 610 are notched to provide the spaces for putting in radiation shielding plates 550. Additionally, secondary grooves 614 for inserting the radiation shielding plates 550 are machined on the bottoms of the primary grooves 612 arranged in one direction, either longitudinally or transversely, on the scintillator wafer machined in a grid pattern. The groove width of the secondary grooves 614 is made equal to or slightly broader than the thickness of the radiation shielding plates to be inserted so that the radiation shielding plates 550 can be fixed in the secondary grooves 614 without being allowed to fall (see FIG. 7C). The radiation shielding plates 550 are inserted into the secondary grooves 614 (see FIG. 7D). If it is likely that the radiation shielding plates 550 are easily pulled out from the secondary grooves 614, the radiation shielding plates 550 may be fixed to the secondary grooves 614 with an instant adhesive. In this connection, it is preferable that the instant adhesive is applied in such a way that it does not overflow the bottom faces of the primary grooves 612. A liquid polyester resin kneaded with rutile type titanium oxide powder is applied to coat the circumferential faces of the scintillator wafer except for the bottom face thereof (the face attached to the machining jig 605), and is also filled into the formed grooves to coat the radiation shielding plates; then, the scintillator wafer is heated in the air at 80°C for 3 hours to cure the resin and to form a light reflecting material 640 (see FIG. 7E). A fence is provided around the scintillator wafer 610 so that the liquid polyester resin kneaded with rutile type titanium oxide may not run out; the fence is not shown in the figure. The liquid polyester resin kneaded with rutile type titanium oxide powder is made to coat the circumferential faces of the scintillator wafer and is filled into the grooves thereof. Then, for the purpose of curing the liquid polyester resin, the wafer is placed in a pot made of polyvinyl chloride and the pot is made to rotate on its axis at about 1,000 rpm and to revolve at about 2,000 rpm, while the interior of the pot is made to reach a vacuum of 3 × 10⁻³ MPa or less, thus defoaming the polyester resin. The integrated body of the scintillator wafer and light reflecting material is detached from the machining jig 605 (see FIG. 7F). The connection portion of the scintillator wafer to the jig is ground and polished from the bottom face thereof up to the 7G-7G level to remove the non-disconnected portion 615 of the scintillator wafer and to separate the scintillators into the individual channels; then, the same level faces are machined on the plurality of scintillators, the plurality of radiation shielding plates, and the light reflecting material surrounding them (see FIG. 7G). A semiconductor photodetecting element array 120 is bonded with a polyester resin onto the same level faces formed on the plurality of scintillators, the plurality of radiation shielding plates, and the light reflecting material, in such a way that in the above mentioned same level faces, the semiconductor photodetecting elements are made to face the respective scintillators. Thus, the radiation detector 600 is manufactured (see FIG. 7H).

As described above in detail, since in the radiation detector of the present invention, a light reflecting material prepared by mixing a polyester resin kneaded with a rutile type titanium oxide powder is used, the reflectivity degradation of the light reflecting material is small even for a large irradiation; additionally, since the scintillators and the semiconductor photodetecting elements are bonded to each other with a polyester resin, the light transmittance degradation of the resin is small for a large irradiation; thus, the output reduction of the radiation detector can be made small, so that the elongation of the operating life of the radiation detector can be accomplished. Consequently, the elongation of the operating life of the radiation CT device can be intended.

## Claims

1. A radiation detector (100) comprising:
a semiconductor photodetecting element array (120) having a plurality of semiconductor photodetecting elements;
a plurality of scintillators (130) arranged on and fixed to the respective semiconductor photodetecting elements on the semiconductor photodetecting element array (120); and
a light reflecting material (140), composed of a mixture of a polyester resin and a rutile type titanium oxide powder, covering the circumferential faces of the scintillators except for the scintillator faces facing the semiconductor photodetecting element array (120).

2. A radiation detector according to claim 1 wherein the light reflecting material (140) is a mixture containing 0.25 to 3 parts by weight of the rutile type titanium oxide powder in relation to 1 part by weight of the polyester resin.

3. A radiation detector according to claim 1 or 2 wherein the average grain size of the rutile type titanium oxide powder ranges from 0.15 µm to 1 µm.

4. A radiation detector according to claim 3 wherein the rutile type titanium oxide powder is a mixture of a titanium oxide powder in the content of 85 to 99 wt% and at least one of an Al₂O₃ powder and a SiO₂ powder in the sum content of 1 to 15 wt%.

5. A radiation detector according to claim 4 wherein the scintillators (130) are bonded onto the semiconductor photodetecting elements (120) with a polyester resin.

6. A radiation detector according to claim 1, 3 or 5 wherein the light reflectivity difference of the light reflecting material (140) with respect to a light in the wavelength region from 420 to 700 nm is within 1 point before and after irradiation of 500,000 roentgens.

7. A radiation CT device equipped with a radiation detector, according to claims 1 to 4.

8. A manufacturing method of a radiation detector (100) comprising the steps of
providing a semiconductor photodetecting element array (120) having a plurality of semiconductor photodetecting elements, and a scintillator block (110);
machining a plurality of parallel grooves on the scintillator block (110) from one face of the scintillator block (110) toward an opposite face of the scintillator block (110) with a portion of the thickness of the scintillator block (110) left unmachined on the opposite face side to form a plurality of scintillators (130) which are segmented by the plurality of grooves but are connected to each other by the non-cut-off portion of the of the thickness of the scintillator block (110);
coating the circumferential faces of the scintillator block (110) other than the opposite face with a liquid polyester resin kneaded with a rutile type titanium oxide powder to fill into the plurality of formed grooves with the liquid polyester resin, and curing the polyester resin to form a light reflecting material on the circumferential faces of the scintillators and between the scintillators (130);
grinding and/or polishing the scintillator block (110) from the opposite face of the scintillator block (110) to remove the non-cut-off portion of the scintillator block (110), to form faces on the face opposite to the one face, at the same level on the plurality of scintillators and the light reflecting material surrounding them; and
bonding the semiconductor photodetecting element array (120) having the plurality of semiconductor photodetecting elements with a polyester resin onto the faces formed at the same level on the plurality of scintillators (130) and the light reflecting material (140) surrounding them so that each of the semiconductor photodetecting elements faces each of the polished end faces of the scintillators located in the faces formed at the same level.

9. A manufacturing method of the radiation detector according to claim 8, further comprising the step of inserting radiation shielding plates (550) into the grooves after machining a plurality of grooves on the scintillator block (110).

10. A manufacturing method of the radiation detector (100) comprising the steps of:
providing a semiconductor photodetecting element array (120) having a plurality of semiconductor photodetecting elements, and a plurality of scintillators (130) each having nearly the same thickness as the width of each semiconductor photodetecting element in the semiconductor photodetecting element array (120);
coating one face, parallel with the direction of thickness of each of the plurality of scintillators (130) with a liquid polyester resin kneaded with a rutile type titanium oxide powder, laminating the plurality of scintillators, and curing the polyester resin;
machining one side face of the laminated scintillators (130) so that the plurality of scintillators and the layer of the mixture interposed therebetween, composed of a polyester resin and a rutile type titanium oxide powder, have faces at the same level;
coating the circumferential faces of the laminated scintillators, other than the machined faces, with a liquid polyester resin kneaded with a rutile type titanium oxide powder, and curing the resin to form a light reflecting material; and
bonding the semiconductor photodetecting element array (120) having the plurality of semiconductor photodetecting elements with a polyester resin onto the faces machined at the same level, so that each of the semiconductor photodetecting elements faces each of the machined end faces of the scintillators (130).

11. A manufacturing method of the radiation detector (100) comprising the steps of:
providing a semiconductor photodetecting element array (120) having a plurality of semiconductor photodetecting elements, a plurality of scintillators (130) each having nearly the same thickness as the width of a semiconductor photodetecting element in the semiconductor photodetecting element array, and a plurality of radiation shielding plates (550);
coating both faces, along the direction of thickness, of each of the plurality of scintillators (130) with a liquid polyester resin kneaded with a rutile type titanium oxide powder, alternately laminating the scintillators and the radiation shielding plates, and curing the polyester resin;
machining one side face of the laminated scintillators (130) so that the plurality of scintillators, the radiation shielding plates interposed therbetween, and the layer of the mixture, composed of a polyester resin and a rutile type titanium oxide powder, have faces at the same level;
coating the circumferential faces of the laminated scintillators (130), other than the machined faces, with a liquid polyester resin kneaded with a rutile type titanium oxide powder, and curing the resin to form a light reflecting material; and
bonding the semiconductor photodetecting element array (120) having the plurality of semiconductor photodetecting elements with a polyester resin onto the faces machined at the same level, so that each of the semiconductor photodetecting elements faces each of the machined end faces of the scintillators.
